# FASCICULE DE BREVET EUROPEEN

(11) **EP 0 543 769 B1**
(45) Date de publication et mention de la délivrance du brevet: **17.04.1996**
(21) Numéro de dépôt: 92810682.2
(22) Date de dépôt: 07.09.1992
(51) Int. Cl.: F24D 10/00

(54) **Installation de chauffage d'eau sanitaire pour la fourniture d'eau chaude et pour le chauffage d'un immeuble**
Brauchwasser-Heizungsanlage für Heizwasserversorgung und Gebäudeheizung
Sanitary water heating installation for hot water distribution and house heating

(30) Priorité: 22.11.1991 CH 3422/91
(43) Date de publication de la demande: 26.05.1993
(73) Titulaire: Saugy, Bernard, CH-1020 Renens (CH)
(72) Inventeur: Saugy, Bernard, CH-1020 Renens (CH)

(56) Documents cités:
- DE-A- 3 132 562
- DE-A- 3 240 944

## Description

La présente invention a pour objet une installation de chauffage d'eau sanitaire pour la fourniture d'eau chaude et pour le chauffage d'un immeuble.

On connaît déjà des installations de chauffage et de fourniture d'eau chaude à un immeuble, qui utilise l'eau chaude sanitaire comme fluide caloporteur. Par exemple dans la demande de brevet allemand DE 31 32 562 A1, il est décrit une installation utilisant l'eau sanitaire comme moyen de transport de la chaleur, sans qu'il ne soit rien précisé en ce qui a trait aux frais. Par contre dans la demande de brevet allemand DE 36 17 061 il est décrit une installation de chauffage d'eau sanitaire pour la fourniture d'eau chaude et pour le chauffage d'un immeuble. Cette installation comprend une conduite d'alimentation d'eau reliée à une conduite constituant une boucle avec une pompe pour la circulation, un dispositif de chauffage pour chauffer l'eau et un dispositif de réglage pour maintenir la température de l'eau constante.

Entre les conduites de sortie et retour au dispositif de chauffage il est prévu pour chaque utilisateur une conduite de distribution, qui présente une conduite principale comportant les radiateurs pour le chauffage et au moins une conduite secondaire comportant des distributeurs pour la fourniture d'eau chaude, ainsi que des éléments de réglage pour la saisie rapide de la chute de température sur la conduite de retour. Cette installation comprend aussi un dispositif de mesure et de calcul de la quantité de chaleur fournie.

Ce dispositif enregistre aussi bien la quantité de chaleur fournie aux radiateurs pour le chauffage que celles fournies aux postes de distribution d'eau chaude.

Le genre d'installation décrite ci-devant présente certains désavantages qui rendent son extension difficile. Ainsi l'eau sanitaire chaude passe dans des radiateurs où elle stationne en été, ce qui entraîne premièrement que les radiateurs satisfassent aux normes qui régissent la distribution d'eau potable et secondement il devra être prévu des moyens pour purger les radiateurs avant la mise en service. En ce qui a trait au calcul et au contrôle de la chaleur fournie, l'installation décrite ci-devant nécessite un appareillage compliqué, donc cher, et forcément davantage sujette aux possibilités de panne.

L'invention a pour buts de fournir une installation qui satisfait aux exigences pour la distribution d'eau sanitaire et qui permet avec des moyens simples un décompte des frais. L'installation selon l'invention définie à la revendication 1 permet d'atteindre ces buts.

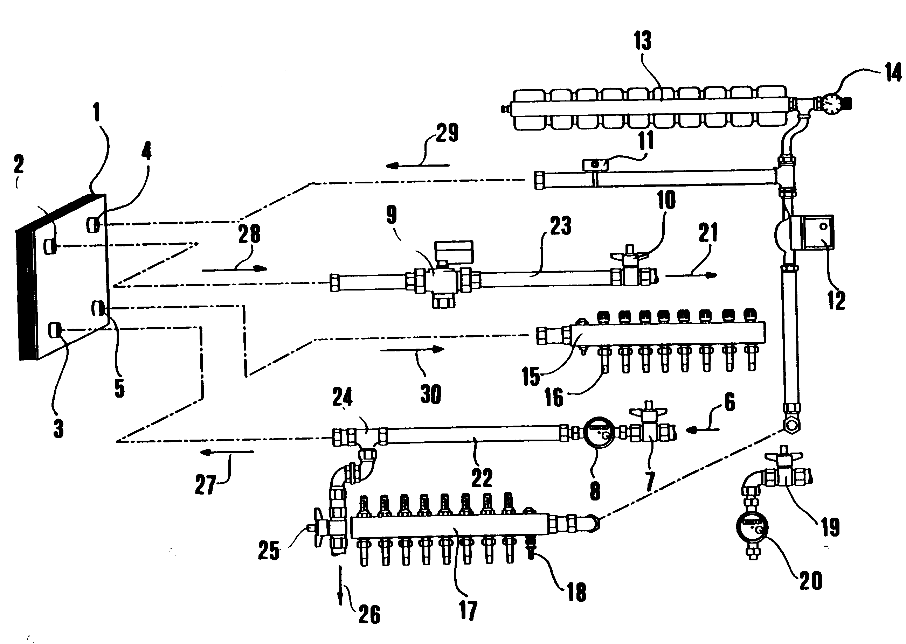

L'invention sera mieux comprise et ses avantages apparaîtront plus clairement à la lecture d'une forme d'exécution en regard du dessin, qui comprend une figure unique qui représente un ensemble de chauffage pour une installation selon l'invention en vue en axonométrie éclatée.

On a représenté à la figure unique un ensemble de chauffage et de distribution d'eau chaude destiné à venir s'insérer dans une boucle de circulation (non représentée) d'eau chaude sanitaire.

L'eau chaude sanitaire arrive par la vanne 7 selon la flèche 6, immédiatement après la vanne 7 se trouve un compteur 8. Puis l'eau chaude passe par la conduite 22 pour arriver sur un T 24, qui par une bifurcation descendante va à la vanne 25 pour desservir les postes de distribution sanitaire tels que cuisine, lavabos, salle de bain, etc., le flux de l'eau est représenté par la flèche 26. L'autre branche du T 24 représente le flux 27 qui entre dans un échangeur I de chaleur par l'orifice d'entrée 3. Pour en ressortir par l'orifice de sortie 2 selon la flèche 28, par une vanne thermo réglée 9 et la conduite 23, et pour enfin par la vanne 10 retourner à la boucle de circulation selon la flèche 21. Les vannes 7 et 10 sont des vannes d'arrêt prévues pour être utilisées en cas d'avarie dans l'ensemble de distribution permettant ainsi de l'isoler.

L'échangeur de chaleur 1 est un échangeur concu pour recevoir de l'eau sanitaire, c'est par exemple un échangeur à plaque.

Dans sa deuxième partie l'échangeur comprend un circuit secondaire dans lequel circule un fluide, qui peut être de l'eau, auquel l'eau chaude sanitaire communique une partie de sa chaleur.

Le circuit secondaire est parcouru par le fluide caloporteur dans le sens indiqué par les flèches 29 et 30. Ainsi, comme on le voit sur la figure, le fluide caloporteur entre dans l'échangeur 1 par l'orifice d'entrée 4 et ressort par l'orifice de sortie 5 après avoir été chauffé. Ensuite il pénètre dans un distributeur 15 et va vers les échangeurs de chaleur (non représentés) qui peuvent être des radiateurs ou des serpentins circulant dans le sol ou le plafond. Le distributeur comprend plusieurs robinets 16 afin de mieux pouvoir régler le chauffage des différentes pièces.

Le retour du fluide caloporteur après avoir perdu une partie de sa chaleur passe par le dispositif de réception 17 qui comporte un robinet de vidange et de remplissage 18 relié à l'alimentation en eau froide 19,20 (la liaison n'est pas représentée sur la figure afin de ne pas charger cette dernière). Après le dispositif de réception 17 le fluide caloporteur est conduit dans un circulateur 12 et retour à l'échangeur de chaleur 1 selon la flèche 29. Le circuit secondaire comporte un vase d'expansion 13 avec un manomètre 14 et une soupape de sécurité.

Le circuit secondaire comporte sur la partie de retour à l'échangeur 1 une sonde thermique 11 qui commande le degré d'ouverture de la vanne 9.

Le fonctionnement de l'ensemble est le suivant :
- en hiver: l'eau chaude circulaire à travers l'échangeur 1 plus ou moins rapidement suivant l'ouverture de la vanne 9. Le volume d'eau circulant est cumulé avec le volume d'eau chaude soutiré;
- en été: l'eau chaude circule très lentement à travers l'échangeur de manière à ce que l'eau soit immédiatement chaude au moment du soutirage. La vanne 9 n'est que très faiblement ouverte et l'eau ne communique aucune chaleur au circuit secondaire.

Par cette installation on atteint les deux buts prévus, c'est-à-dire on a une installation conforme aux normes pour la distribution d'eau sanitaire et le décompte est simple puisque l'on fera les factures en fonction du nombre de litres d'eau chaude qui auront été fournis à chaque usager au travers de l'ensemble.

Enfin, l'ensemble peut être très compact donc facile à placer; en effet, il peut avoir les dimensions suivantes : hauteur 800 mm, longeur 810 mm, largeur 180 mm.

## Revendications

1. Installation de chauffage d'eau sanitaire (27,28) pour la fourniture d'eau chaude sanitaire et pour le chauffage d'un immeuble, comportant un dispositif de chauffage pour chauffer l'eau sanitaire, une conduite (22,23), reliée à une conduite d'alimentation en eau froide, constituant une boucle dans laquelle l'eau sanitaire chaude circule sous l'action d'un circulateur, un dispositif de réglage pour maintenir la température de l'eau constante, pour chaque utilisateur étant prévu un ensemble comportant une conduite d'amenée d'eau chaude sanitaire (22) branchée sur la boucle avec un compteur volunébique (8), la conduite d'amenée d'eau chaude comportant une première partie (26) destinée à fournir de l'eau chaude aux points de distribution prévus, une seconde partie (27) passant à travers un échangeur de chaleur (1), caractérisée en ce que dans ledit échangeur la chaleur est cédée à un circuit secondaire (15, 17, 29, 30) ayant un fluide circulant dans des moyens de chauffage de l'immeuble activé par un circulateur (12) et comportant une sonde de température (11) ayant une action sur une vanne de régulation (9), du dispositif de réglage, placée sur la conduite de retour (23) de l'eau sanitaire à la boucle.

## Patentansprüche

1. Sanitär-calobus ist ein neuartiges Heizungssystem zur Brauchwasseraufbereitung (27, 28) aller Art. das System besteht aus dem Heizelement für das ankommende kalte Wasser, der Leitung des Warmwasserkreislaufs (22, 23), einer Zirkulationspumpe für das Warmwasser im Kreislauf, sowie einem Regelmechanismus, welcher für eine konstante Temperatur des Warmwassers im Kreislauf sorgt. Jeder Benutzer besitzt einen individuellen Anschluss (22) an dem Warmwasserkreislauf, ausgestattet mit einem volumetrischen Zähler (8). Der Warmwasseranschluss besteht erstens aus den Zuleitungen zu den vorgesehenen Verteilpunkten. Der zweite Teil besteht aus einem Wärmetauscher (1) in dem das warm Wasser die Flüssigkeit des sekundären Kreislaufs (15, 17, 29, 30) aufwärmt. Diese Flüssigkeit wird durch eine Zirkulationspumpe angetrieben (12). Eine im Innern des sekundären Kreislaufs angebrachte Temperaturmesssonde (11) erlaubt es einem Regelsystem die Temperatur des sekundären Kreislaufs über ein Regelventil (9) im Rücklauf (23) zum Hauptwasserkreislauf zu steuern.

## Claims

1. The sanitary calobus is a heating system for sanitary water (27, 28). It supplies hot sanitary water and provides heating for buildings. It consists of a heating device for sanitary water, of a loop-shaped pipe (22, 23), connected to a cold water supply pipe, into which hot sanitary water is pumped, and of a regulating mechanism that keeps water temperature constant. The system with which each user is provided consists of a hot sanitary water supply pipe (22) which is connected to the loop with a volumetric meter (8). The hot water supply pipe is made up of two parts : the first one (26) supplies provided distribution points with hot water; the second one (27), which passes through a heat exchanger (1), is characterised by the fact that within the said exchanger heat is ceded to a secondary circuit (15, 17, 29, 30). This circuit contains a fluid that is pumped (12) into the building's heating system, and a thermometer (11) which acts upon a gate (9) that regulates the flow inside the pipe (23) carrying sanitary water back to the loop.
